(19) **Europäisches Patentamt / European Patent Office / Office européen des brevets**

(11) **EP 4 265 091 B1**

(12) **EUROPEAN PATENT SPECIFICATION**

(45) Date of publication and mention of the grant of the patent:
**11.03.2026 Bulletin 2026/11**

(21) Application number: **21906308.8**

(22) Date of filing: **29.11.2021**

(51) International Patent Classification (IPC):
*A01B 69/00* (2006.01)   *G05D 1/628* (2024.01)
*G05D 1/648* (2024.01)   *G05D 105/15* (2024.01)
*G05D 107/20* (2024.01)   *G05D 109/10* (2024.01)
*A01B 69/04* (2006.01)

(52) Cooperative Patent Classification (CPC):
**A01B 69/008; G05D 1/628; G05D 1/648;**
G05D 2105/15; G05D 2107/21; G05D 2109/10

(86) International application number:
**PCT/JP2021/043533**

(87) International publication number:
**WO 2022/130945 (23.06.2022 Gazette 2022/25)**

(54) **AUTOMATIC TRAVELING SYSTEM, AUTOMATIC TRAVELING METHOD, AND AUTOMATIC TRAVELING PROGRAM**

AUTOMATISCHES FAHRSYSTEM, AUTOMATISCHES FAHRVERFAHREN UND AUTOMATISCHES FAHRPROGRAMM

SYSTÈME DE DÉPLACEMENT AUTOMATIQUE, PROCÉDÉ DE DÉPLACEMENT AUTOMATIQUE, ET PROGRAMME DE DÉPLACEMENT AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2020 JP 2020207615**

(43) Date of publication of application:
**25.10.2023 Bulletin 2023/43**

(73) Proprietor: **Yanmar Holdings Co., Ltd.**
**Osaka-shi, Osaka 530-0013 (JP)**

(72) Inventors:
• **HIRAMATSU Toshifumi**
  **Osaka-shi, Osaka 530-0013 (JP)**
• **MIZUKURA Yoshiharu**
  **Osaka-shi, Osaka 530-0013 (JP)**
• **KUGA Toru**
  **Osaka-shi, Osaka 530-0013 (JP)**
• **YAKUSHIGAWA Kaede**
  **Osaka-shi, Osaka 530-0013 (JP)**
• **KITANO Keita**
  **Osaka-shi, Osaka 530-0013 (JP)**

(74) Representative: **Sekiguchi, Kazuya**
**Keisen IP**
**Lochhamer Straße 75**
**82166 Gräfelfing (DE)**

(56) References cited:
CN-A- 112 015 176     JP-A- 2017 204 061
JP-A- 2019 101 931     JP-A- H0 994 006
US-A1- 2005 075 784    US-A1- 2016 109 885
US-A1- 2018 113 471

EP 4 265 091 B1

## Description

### TECHNICAL FIELD

The present invention relates to an automatic traveling system, an automatic traveling method, and an automatic traveling program for causing a work vehicle to perform automatic traveling.

### BACKGROUND ART

In an automatic traveling system, after a specific area (e.g., a farm field) where a work vehicle performs the work is registered, a work area and a headland area outside the work area are set separately. In the conventional automatic traveling system, from the viewpoint of safety, a travel route for automatic traveling is generated only in the work area, and the travel route is not generated in the headland area. In this case, in the headland area, an operator needs to drive the work vehicle by him/herself and perform the work, resulting in a reduction in work efficiency. Thus, in order to improve work efficiency, an automatic traveling system has been proposed which allows the work vehicle to perform automatic traveling in the headland area by generating a travel route in the headland area (e.g., see Patent literature 1).

### CITATION LIST

Patent Literature

Patent Literature 1: JP 2018-147421 A
Another example of a travel route generating device and a method could be found in US2018/113471A1.

### DISCLOSURE OF INVENTION

### PROBLEMS TO BE SOLVED BY THE INVENTION

However, with the conventional automatic traveling system, there are cases where obstacles present in the headland area cause a reduction in work efficiency. For example, if the travel route is generated in the farm field where an obstacle is present, the work vehicle cannot perform automatic traveling around the obstacle, causing a problem of generating an unworked area and reducing work efficiency. Further, if an obstacle appears temporarily after the travel routes is generated in the farm field where the obstacle is originally absent, the work vehicle detects the obstacle during automatic traveling. In this case, the work vehicle stops automatic traveling and working, causing a problem of reducing work efficiency.
An object of the present invention is to provide an automatic traveling system, an automatic traveling method, and an automatic traveling program capable of preventing a reduction in work efficiency caused by an obstacle in a specific area.

### MEANS FOR SOLVING THE PROBLEMS

An automatic traveling system according to the present invention is an automatic traveling system that causes a work vehicle to perform automatic traveling within a specific area. The automatic traveling system includes a detection processing unit, a bypass setting processing unit, and a travel processing unit. The detection processing unit detects an obstacle in a traveling direction of the work vehicle. The bypass setting processing unit sets a bypass starting position, which is a starting position of a bypass route along which the work vehicle travels while bypassing the obstacle detected by the detection processing unit, and a bypass end position, which is an end position of the bypass route. The travel processing unit causes the work vehicle to travel along the bypass route in a case where the obstacle is detected by the detection processing unit.
An automatic traveling method according to the present invention is an automatic traveling method for causing a work vehicle to perform automatic traveling within a specific area. In the method, one or more processors detect an obstacle in a traveling direction of the work vehicle, set a bypass starting position, which is a starting position of a bypass route along which the work vehicle travels while bypassing the obstacle, and a bypass end position, which is an end position of the bypass route, and cause the work vehicle to travel along the bypass route upon detection of the obstacle.
An automatic traveling program according to the present invention is an automatic traveling program for causing a work vehicle to perform automatic traveling within a specific area. The program causes one or more processors to detect an obstacle in a traveling direction of the work vehicle, to set a bypass starting position, which is a starting position of a bypass route along which the work vehicle travels while avoiding the obstacle, and a bypass end position, which is an end position of the bypass route, and to cause the work vehicle to travel along the bypass route upon detection of the obstacle.

### EFFECT OF THE INVENTION

According to the present invention, it is possible to provide the automatic traveling system, the automatic traveling method, and the traveling driving program capable of preventing a reduction in work efficiency caused by the obstacle within the specific area.

### BRIEF DESCRIPTION OF DRAWINGS

FIG. 1 is a block diagram illustrating a configuration of an automatic traveling system according to an embodiment of the present invention.

FIG. 2 is an external view illustrating an example of a work vehicle according to the embodiment of the present invention.

FIG. 3 is a diagram illustrating an example of a travel route of the work vehicle according to the embodiment of the present invention.

FIG. 4A is a diagram illustrating an example of a traveling method of the work vehicle according to the embodiment of the present invention.

FIG. 4B is a diagram illustrating an example of the traveling method of the work vehicle according to the embodiment of the present invention.

FIG. 4C is a diagram illustrating an example of the traveling method of the work vehicle according to the embodiment of the present invention.

FIG. 4D is a diagram illustrating an example of the traveling method of the work vehicle according to the embodiment of the present invention.

FIG. 4E is a diagram illustrating an example of the traveling method of the work vehicle according to the embodiment of the present invention.

FIG. 4F is a diagram illustrating an example of the traveling method of the work vehicle according to the embodiment of the present invention.

FIG. 5A is a diagram illustrating an example of a traveling method of a conventional work vehicle.

FIG. 5B is a diagram illustrating an example of the traveling method of the conventional work vehicle.

FIG. 6A is a diagram illustrating an example of bypass traveling of the work vehicle according to the embodiment of the present invention.

FIG. 6B is a diagram illustrating an example of the bypass traveling of the work vehicle according to the embodiment of the present invention.

FIG. 7A is a diagram illustrating an example of the traveling method of the conventional work vehicle.

FIG. 7B is a diagram illustrating an example of the bypass traveling of the work vehicle according to the embodiment of the present invention.

FIG. 8 is a diagram for explaining a condition for selecting a bypass route for the work vehicle according to the embodiment of the present invention.

FIG. 9A is a diagram illustrating an example of the bypass traveling of the work vehicle according to the embodiment of the present invention.

FIG. 9B is a diagram illustrating an example of the bypass traveling of the work vehicle according to the embodiment of the present invention.

FIG. 10A is a diagram illustrating an example of the traveling method of the conventional work vehicle.

FIG. 10B is a diagram illustrating an example of the bypass traveling of the work vehicle according to the embodiment of the present invention.

FIG. 11 is a flow chart illustrating an example of a procedure of automatic traveling processes executed by the automatic traveling system according to the embodiment of the present invention.

DESCRIPTION OF EMBODIMENTS

The invention is set forth in the independent claims 1, 10, 11 and in the dependent claims 2 to 9.

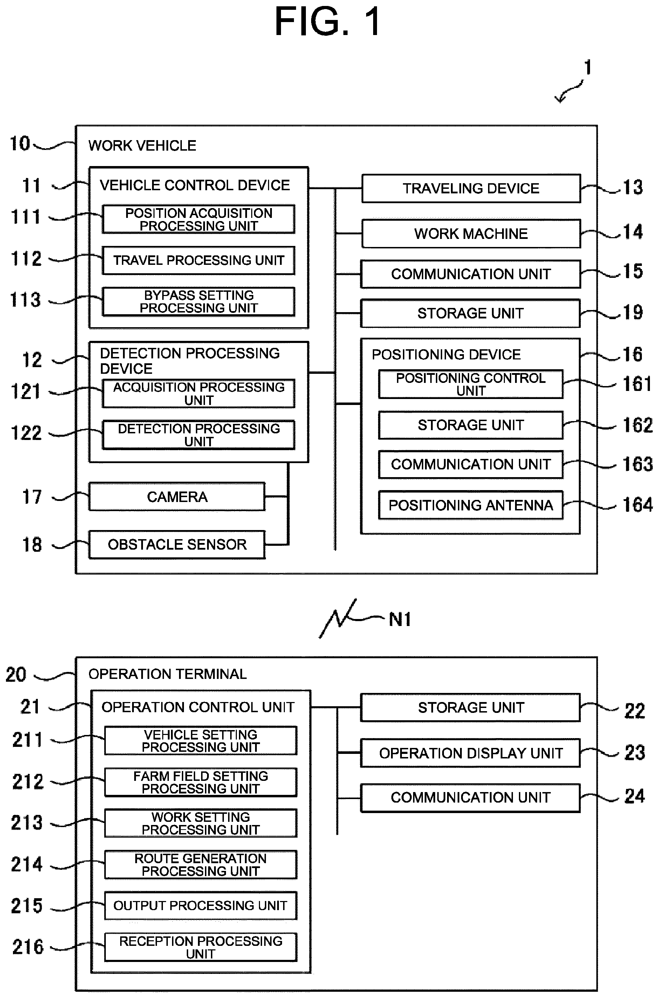

As shown in FIG. 1, an automatic traveling system 1 according to an embodiment of the present invention includes a work vehicle 10 and an operation terminal 20. The work vehicle 10 and the operation terminal 20 can communicate via a communication network N1. For example, the work vehicle 10 and the operation terminal 20 can communicate via a mobile phone network, a packet network, or a wireless LAN. The automatic traveling system 1 is a system that causes the work vehicle 10 to perform automatic traveling in a farm field F.

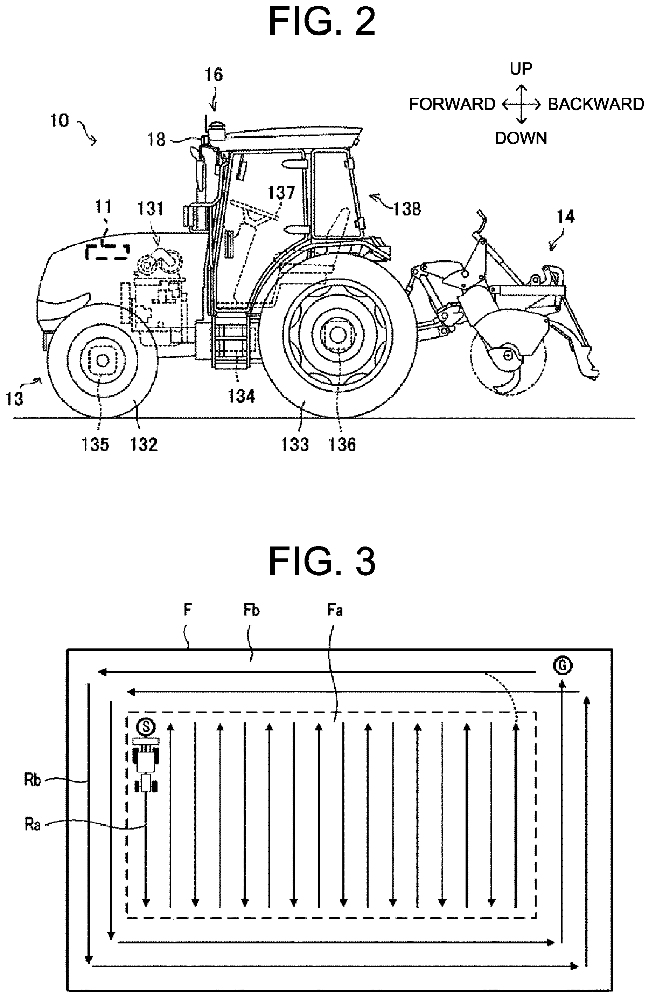

In the present embodiment, a case where the work vehicle 10 is a tractor will be described as an example. Note that, as another embodiment, the work vehicle 10 may be a rice transplanter, a combine harvester, a construction machine, a snowplow, or the like. The work vehicle 10 is a so-called robot tractor having a configuration capable of performing automatic traveling (autonomous traveling) along travel routes R1 and R2 preset in the farm field F (see FIG. 3). For example, the work vehicle 10 can automatically travel along travel routes Ra and Rb generated in advance in the farm field F based on position information on a current position Pa of the work vehicle 10 calculated by a positioning device 16. Note that the travel route Ra is a travel route in a work area Fa, which is an area inside of the farm field F, and the travel route Rb is a travel route in a headland area Fb, which is an area outside of the farm field F (see FIG. 3).

For example, in the farm field F shown in FIG. 3, the work vehicle 10 travels back and forth in parallel from a work starting position S in the work area Fa and travels spirally around an outer periphery toward a work end position G in the headland area Fb. The travel routes Ra and Rb are not limited to the routes shown in FIG. 3 and are appropriately set according to the work content.

[Work vehicle 10]

As shown in FIG. 1 and FIG. 2, the work vehicle 10 includes a vehicle control device 11, a detection processing device 12, a traveling device 13, a work machine 14, a communication unit 15, a positioning device 16, a camera 17, an obstacle sensor 18, a storage unit 19, and the like. The vehicle control device 11 is electrically connected to the traveling device 13, the work machine 14, the positioning device 16, and the like. Note that the vehicle control device 11 and the positioning device 16 may be capable of performing wireless communication. Further, the camera 17 and the obstacle sensor 18 are electrically connected to the detection processing device 12.

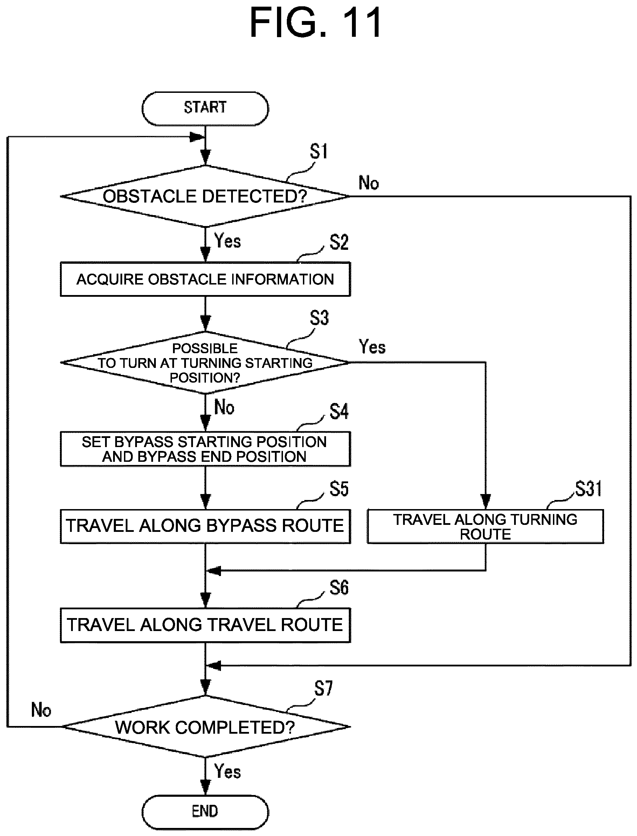

The storage unit 19 is a non-volatile storage unit such as a hard disk drive (HDD) or a solid state drive (SSD) that stores various pieces of information. The storage unit 19 stores a control program such as an automatic traveling program for causing the vehicle control device 11 and the detection processing device 12 to execute automatic traveling processes (see FIG. 11) described below. For example, the automatic traveling program is non-temporarily recorded in a computer-readable recording medium such as a CD or a DVD, read by a predetermined reading device (not shown), and stored in the storage unit 19. Note that the automatic traveling program may be downloaded from a server (not shown) to the work vehicle 10 via the communication network N1 and stored in the storage unit 19. Further, the storage unit 19 stores data of the travel routes Ra and Rb generated by the operation terminal 20, data of the position information of the work vehicle 10 measured by the positioning device 16, and the like. Further, the storage unit 19 may store work information.

The traveling device 13 is a driving unit that causes the work vehicle 10 to travel. As shown in FIG. 2, the traveling device 13 includes an engine 131, front wheels 132, rear wheels 133, a transmission 134, a front axle 135, a rear axle 136, a steering wheel 137, and the like. Note that the front wheels 132 and the rear wheels 133 are provided on both the left and right sides of the work vehicle 10. Further, the traveling device 13 is not limited to a wheel type having the front wheels 132 and the rear wheels 133 and may be a crawler type having crawlers provided on the left and right sides of the work vehicle 10.

The engine 131 is a driving source such as a diesel engine or a gasoline engine that is driven using fuel supplied in a fuel tank not shown. The traveling device 13 may be provided with an electric motor as a driving source together with or instead of the engine 131. Note that a generator not shown is connected to the engine 131, and electric power is supplied from the generator to an electric component such as the vehicle control device 11, a battery, and the like, provided in the work vehicle 10. Note that the battery is charged by the electric power supplied from the generator. In this manner, the electric components such as the vehicle control device 11 and the positioning device 16 provided in the work vehicle 10 can be driven by the electric power supplied from the battery after the engine 131 stops.

The driving force of the engine 131 is transmitted to the front wheels 132 via the transmission 134 and the front axle 135 and to the rear wheels 133 via the transmission 134 and the rear axle 136. Further, the driving force of the engine 131 is also transmitted to the work machine 14 via a PTO shaft (not shown). When the work vehicle 10 performs automatic traveling, the traveling device 13 performs traveling movement according to a command from the vehicle control device 11.

The work machine 14 is, for example, a cultivator, a mower, a plow, a fertilizer applicator, a seeding machine, or the like and is detachably mounted to the work vehicle 10. In this manner, the work vehicle 10 can perform various types of work using the various work machines 14. FIG. 2 shows a case where the work machine 14 is a cultivator.

In the work vehicle 10, the work machine 14 may be supported so as to be vertically movable by a lifting mechanism not shown. The vehicle control device 11 can control the lifting mechanism to vertically move the work machine 14. For example, the vehicle control device 11 lowers the work machine 14 when the work vehicle 10 moves forward in the work target area of the farm field F and raises the work machine 14 when the work vehicle 10 moves backward. Further, the vehicle control device 11 outputs a work stop command to the work machine 14 when acquiring a work stop instruction. For example, the vehicle control device 11 acquires the stop instruction from the operation terminal 20 when the operator performs a stop instruction operation on the operation terminal 20. Having acquired the work stop instruction, the vehicle control device 11 stops driving of the PTO shaft, thereby stopping the work of the work machine 14.

The steering wheel 137 is an operation unit operated by the operator or the vehicle control device 11. For example, in the traveling device 13, an angle of the front wheels 132 is changed by a hydraulic power steering mechanism not shown or the like in accordance with the operation of the steering wheel 137 by the vehicle control device 11, so that the traveling direction of the work vehicle 10 changes.

Further, the traveling device 13 includes, in addition to the steering wheel 137, a shift lever, an accelerator, a brake, and the like, not shown, operated by the vehicle control device 11. Further, in the traveling device 13, a gear of the transmission 134 is switched to a forward gear, a reverse gear, or the like in accordance with the operation of the shift lever by the vehicle control device 11, and a traveling mode of the work vehicle 10 is switched to a forward mode, a reverse mode, or the like. Further, the vehicle control device 11 controls the rotation speed of the engine 131 by operating the accelerator. Further, the vehicle control device 11 operates the brakes to stop the rotation of the front wheels 132 and the rear wheels 133 using electromagnetic brakes.

The positioning device 16 is communication equipment including a positioning control unit 161, a storage unit 162, a communication unit 163, a positioning antenna 164, and the like. For example, as shown in FIG. 2, the positioning device 16 is provided above a cabin 138 in which the operator rides. Further, an installation location of the positioning device 16 is not limited to the cabin 138. Further, the positioning control unit 161, the storage unit 162, the communication unit 163, and the positioning antenna 164 of the positioning device 16 may be separately disposed at different positions in the work vehicle 10. Note that, as described above, the battery is connected to the positioning device 16, so that the positioning device 16 can operate when the engine 131 is stopped. Further, as the positioning device 16, for example, a mobile phone terminal, a smart phone, a tablet terminal, or the like may be used an alternative.

The positioning control unit 161 is a computer system that includes one or more processors and storage memories such as a nonvolatile memory and an RAM. The storage unit 162 is a non-volatile memory or the like that stores a program for causing the positioning control unit 161 to execute a positioning process, and data such as positioning information and movement information. For example, the program is non-temporarily recorded in a computer-readable recording medium such as a CD or a DVD, read by a predetermined reading device (not shown), and stored in the storage unit 162. Note that the program may be downloaded from a server (not shown) to the positioning device 16 via the communication network N1 and stored in the storage unit 162.

The communication unit 163 is communication interface that connects the positioning device 16 to the communication network N1 by wire or wirelessly and executes data communication according to a predetermined communication protocol with external equipment such as a base station server via the communication network N1.

The positioning antenna 164 is an antenna that receives radio waves (GNSS signals) transmitted from satellites.

The positioning control unit 161 calculates the position (current position Pa) of the work vehicle 10 based on GNSS signals received from satellites by the positioning antenna 164. For example, when the work vehicle 10 automatically travels in the farm field F, if the positioning antenna 164 receives radio waves (time of transmission, orbit information, etc.) transmitted from each of a plurality of satellites, the positioning control unit 161 calculates a distance between the positioning antenna 164 and each satellite, thereby calculating the current position Pa (latitude and longitude) of the work vehicle 10 based on the calculated distance. Further, the positioning control unit 161 may perform positioning by a real-time kinematic method (RTK-GPS positioning method (RTK method)) in which the current position Pa of the work vehicle 10 is calculated using correction information corresponding to a base station (reference station) close to the work vehicle 10. In this manner, the work vehicle 10 automatically travels using the positioning information by the RTK method.

The obstacle sensor 18 is a sensor that detects an obstacle in a predetermined detection area using infrared rays, ultrasonic waves, or the like. For example, the obstacle sensor 18 may be a lidar sensor (distance sensor) that can three-dimensionally measure the distance to an object (obstacle) to be measured using a laser or a sonar sensor with multiple sonars that can measure the distance to an object to be measured using ultrasonic waves. The obstacle sensor 18 is installed in a front part of the body of the work vehicle 10 (see FIG. 2) and detects an obstacle in front of the work vehicle 10.

The obstacle sensor 18 is configured to detect an obstacle in a detection area of, for example, about 10 m in front of the work vehicle 10 and about 4 m in width.

Examples of the obstacle include a ridge near the boundary of the farm field F, a water intake installed near the comer of the farm field F, a fixed object such as a utility pole, and a material temporarily placed in the work area Fa or the headland area Fb. The obstacle sensor 18 transmits measurement information (measurement distance) to the detection processing device 12.

Note that the obstacle sensor 18 may be installed only in front of the work vehicle 10, or a plurality of obstacle sensors 18 may be installed in front of the work vehicle 10 and in a place other than the front (rear, side, etc.).

Note that the detection processing device 12 can communicate with the obstacle sensor 18 in a case where the obstacle sensor 18 is electrically connected to the work vehicle 10. The detection processing device 12 capable of communicating with the obstacle sensors 18 acquires the number of the obstacle sensors 18 and identification information (equipment information) of each obstacle sensor 18.

The camera 17 is a digital camera that captures an image of an object and outputs the image as digital image data. The camera 17 continuously captures images of the object at a predetermined frame rate, generates frame images with predetermined resolution, and sequentially transmits the frame images to the detection processing device 12.

Each of the vehicle control device 11 and the detection processing device 12 includes control equipment such as a CPU, an ROM, and an RAM. The CPU is a processor that executes various arithmetic processes. The ROM is a non-volatile storage unit in which control programs such as BIOS and OS for causing the CPU to execute the various arithmetic processes are prestored. The RAM is a volatile or non-volatile storage unit that stores various pieces of information and is used as a temporary storage memory (work area) for the various processes executed by the CPU. Finally, the vehicle control device 11 and the detection processing device 12 control the work vehicle 10 by causing the CPU to execute the various control programs prestored in the ROM or the storage unit 19.

The detection processing device 12 acquires measurement information from the obstacle sensor 18 and determines whether or not an obstacle is included in the detection area based on the measurement information. Specifically, as shown in FIG. 1, the detection processing device 12 includes various processing units such as an acquisition processing unit 121 and a detection processing unit 122. The detection processing device 12 functions as the various processing units by causing the CPU to execute the various processes according to the automatic traveling program. Further, some or all of the processing units may be configured by an electronic circuit. Note that the automatic traveling program may be a program for causing a plurality of processors to function as the processing units.

The acquisition processing unit 121 acquires the measurement information from one or more obstacle sensors 18. Specifically, the acquisition processing unit 121 acquires the measurement information on the detection area from the obstacle sensor 18 installed in front of the work vehicle 10. For example, if an obstacle appears in the detection area, the acquisition processing unit 121 acquires the measurement distance (distance from the obstacle sensor 18 to the obstacle) measured by the obstacle sensor 18.

Further, the acquisition processing unit 121 acquires captured images from one or more cameras 17 The acquisition processing unit 121 stores the acquired captured images in the storage unit 19 with the image capturing time. Further, the acquisition processing unit 121 outputs image data of the acquired captured images to the operation terminal 20.

The detection processing unit 122 detects an obstacle in the traveling direction of the work vehicle 10 based on the measurement information acquired by the acquisition processing unit 121. Specifically, the detection processing unit 122 determines whether or not an obstacle is included in the detection area based on the measurement information. Further, the detection processing unit 122 determines the position and size of the obstacle. Note that the detection processing unit 122 may detect the obstacle based on the captured image acquired by the camera 17.

The vehicle control device 11 controls the movement of the work vehicle 10 according to various user operations on the work vehicle 10. Further, the vehicle control device 11 executes the automatic traveling process of the work vehicle 10 based on the current position of the work vehicle 10 calculated by the positioning device 16 and the travel routes Ra and Rb generated in advance. Further, if the obstacle is detected, the vehicle control device 11 causes the work vehicle 10 to perform bypass traveling so that the work vehicle 10 does not contact with the obstacle.

Specifically, as shown in FIG. 1, the vehicle control device 11 includes various processing units such as a position acquisition processing unit 111, a travel processing unit 112, a bypass setting processing unit 113, and the like. Note that the vehicle control device 11 functions as the various processing units by causing the CPU to execute the various processes according to the automatic traveling program. Further, some or all of the processing units may be configured by an electronic circuit. Note that the automatic traveling program may be a program for causing a plurality of processors to function as the processing units.

The position acquisition processing unit 111 acquires the position information of the work vehicle 10. Specifically, the position acquisition processing unit 111 acquires the current position Pa of the work vehicle 10 based on positioning information measured by the positioning device 16. Having acquired the current position Pa, the position acquisition processing unit 111 registers the current position Pa in the storage unit 19.

The travel processing unit 112 controls traveling of the work vehicle 10. Specifically, the travel processing unit 112 causes the work vehicle 10 to start automatic traveling after acquiring a work starting instruction from the operation terminal 20. For example, when the operator presses a work starting button on an operation screen of the operation terminal 20, the operation terminal 20 outputs the work starting instruction to the work vehicle 10. Having acquired the work starting instruction from the operation terminal 20, the travel processing unit 112 causes the work vehicle 10 to start automatic traveling based on the current position Pa. In this manner, the work vehicle 10 starts the automatic traveling along the travel routes Ra and Rb, thereby starting the work with the work machine 14. Note that the travel routes Ra and Rb along which the work vehicle 10 travels are generated by, for example, the operation terminal 20. The work vehicle 10 acquires data on the travel routes Ra and Rb from the operation terminal 20 and automatically travels in the farm field F along the travel routes Ra and Rb (see FIG. 3).

Further, the travel processing unit 112 stops the automatic traveling of the work vehicle 10 when acquiring a travel stop instruction from the operation terminal 20. For example, when the operator presses a travel stop button on the operation screen of the operation terminal 20, the operation terminal 20 outputs the travel stop instruction to the work vehicle 10.

Further, the travel processing unit 112 executes traveling restriction for restricting the automatic traveling of the work vehicle 10 if the detection processing unit 122 detects an obstacle in the work area Fa. For example, if the detection processing unit 122 detects the obstacle in the work area Fa, the travel processing unit 112 causes the work vehicle 10 to travel at a reduced speed. Further, if the detection processing unit 122 detects the obstacle in the work area Fa, the travel processing unit 112 may stop the work vehicle 10. Further, if the detection processing unit 122 detects the obstacle in the work area Fa, the detection processing device 12 may issue an alarm to the outside without executing the traveling restriction by the travel processing unit 112.

In the conventional automatic traveling system, for example, if an obstacle is detected in the headland area Fb, the automatic traveling of the work vehicle 10 is stopped and the work is interrupted, causing a problem of reducing work efficiency. On the other hand, the automatic traveling system 1 according to the present embodiment can prevent a reduction in work efficiency caused by the obstacle in the farm field F as described below.

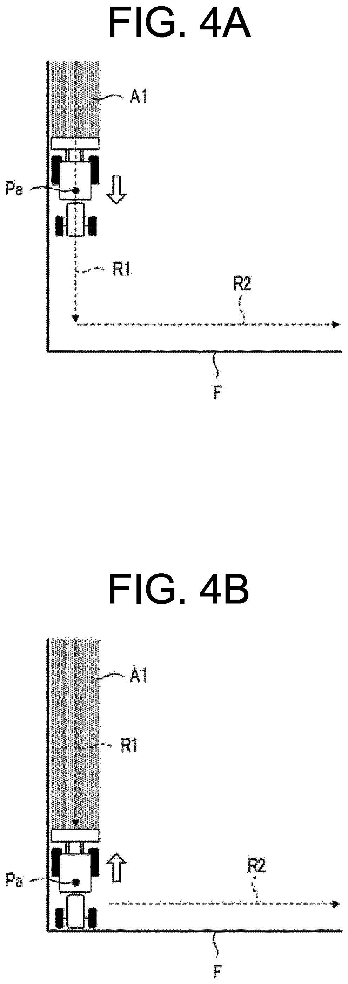

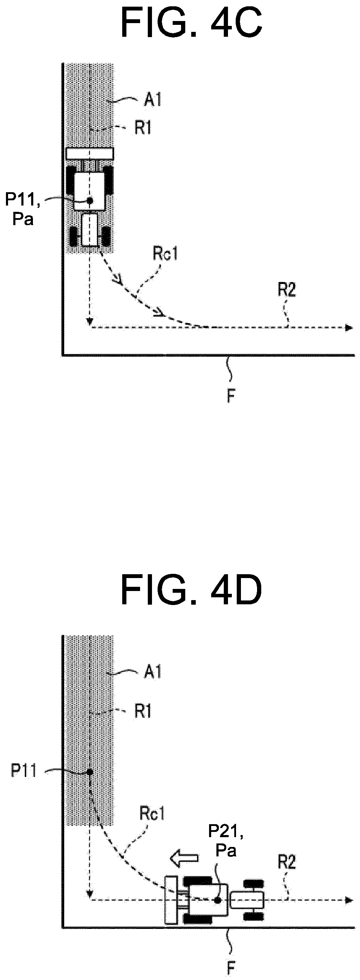

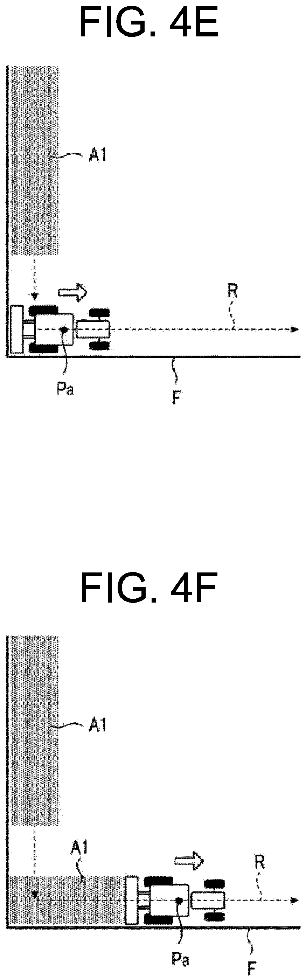

Here, an example of a traveling method used when the work vehicle 10 travels (turns) in a corner of the headland area Fb in the farm field F will be described. For example, as shown in FIG. 4A, the work vehicle 10 performs the work while traveling forward along the travel route R1 in the headland area Fb along the boundary (ridge, etc.) of the farm field F. In FIG. 4A, a reference sign Pa represents the current position (turning center) of the work vehicle 10, and a reference sign A1 represents a worked area by the work machine 14. Next, the work vehicle 10 travels forward along the travel route R1, and when the work vehicle 10 reaches an end portion of the farm field F, the work vehicle 10 travels backward along the travel route R1 by a predetermined distance (see FIG. 4B). Next, the work vehicle 10 travels backward along the travel route R1, and when the work vehicle 10 reaches a turning starting position P11, the work vehicle 10 performs turn traveling along a turning route Rc1 (see FIG. 4C). Next, when the work vehicle 10 reaches a turning end position P21 on the travel route R2 along the boundary of the farm field F, the work vehicle 10 travels backward along the travel route R2 (see FIG. 4D). Next, when the work vehicle 10 travels backward along the travel route R2 and reaches the end portion of the farm field F (see FIG. 4E), the work vehicle 10 performs the work while traveling forward along the travel route R2 (see FIG. 4F).

The turning starting position P11 and the turning end position P21 are set in the process of generating the travel routes Ra and Rb by the operation terminal 20. For example, the turning starting position P11 and the turning end position P21 are set based on a turning radius r1 of the work vehicle 10. Note that the turning radius r1 is set according to the types, sizes (widths), and the like of the work vehicle 10 and the work machine 14. As shown in FIG. 4C and FIG. 4D, when traveling in the headland area Fb, the work vehicle 10 performs the turn traveling along the turning route Rc1 at the corner of the farm field F to switch the traveling direction.

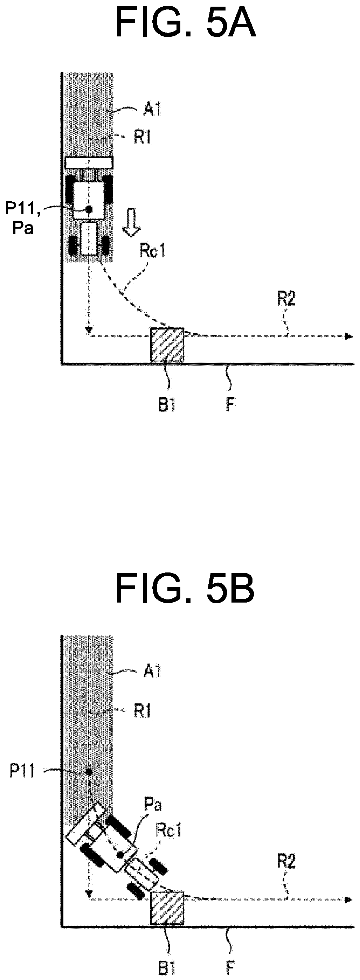

As shown in FIG. 5A and FIG. 5B, if an obstacle B1 is present on the turning route Rc1 at the corner of the farm field F, the work vehicle 10 results in contacting with the obstacle when performing the turn traveling along the turning route Rc1. In this case, in the conventional automatic traveling system, the automatic traveling of the work vehicle 10 stops and the work is interrupted at the moment when the work vehicle 10 detects the obstacle B1.

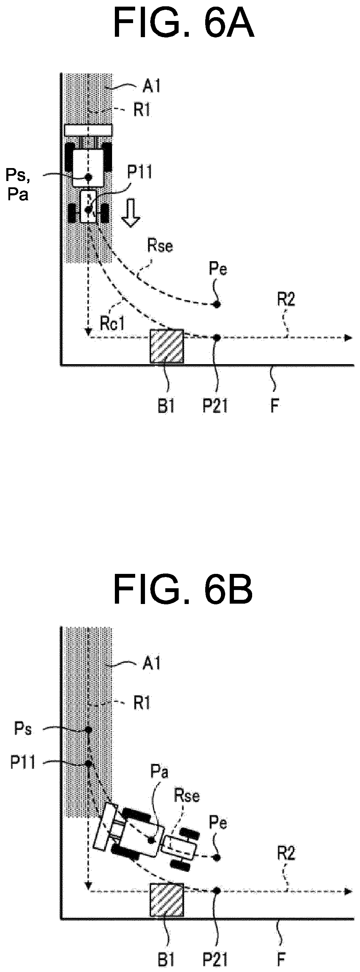

On the other hand, in the automatic traveling system 1 according to the present embodiment, if the detection processing unit 122 detects the obstacle B1, the bypass setting processing unit 113 sets a bypass starting position Ps, which is a starting position of a bypass route Rse along which the work vehicle 10 travels while bypassing the obstacle B1, and a bypass end position Pe, which is an end position of the bypass route Rse (see FIG. 6A and FIG. 6B). The bypass setting processing unit 113 sets the bypass starting position Ps and the bypass end position Pe based on the turning radius r1 of the work vehicle 10. Specifically, while the work vehicle 10 is traveling along a preset travel route, if the detection processing unit 122 detects the obstacle B1 present on the travel route, the bypass setting processing unit 113 sets the bypass starting position Ps and the bypass end position Pe based on a distance from the bypass starting position Ps to the obstacle B1 and the turning radius r1.

For example, while the work vehicle 10 is traveling forward along the travel route R1 in the headland area Fb along the boundary of the farm field F, if the detection processing unit 122 detects the obstacle B1 on the turning route Rc1, the bypass setting processing unit 113 acquires information on the position, size, and the like of the obstacle B1 (obstacle information) from the detection processing device 12 and sets the bypass starting position Ps, in the traveling direction, in front of the turning starting position P11 on the travel route R1. If the detection processing unit 122 detects the obstacle B1, the travel processing unit 112 causes the work vehicle 10 to perform the automatic traveling based on the bypass starting position Ps and the bypass end position Pe.

In this manner, the work vehicle 10 travels forward along the travel route R1 to reach the end portion of the farm field F, and then travels backward along the travel route R1 to the bypass starting position Ps (see FIG. 6A). Then, the work vehicle 10 performs the turn traveling along the bypass route Rse from the bypass starting position Ps to the bypass end position Pe (see FIG. 6B). When reaching the bypass end position Pe, the work vehicle 10 performs the turn traveling from the bypass end position Pe to the travel route R2 and travels forward along the travel route R2. According to this configuration, the work vehicle 10 can bypass the obstacle B1 and continue traveling and working without being stopped by the detection of the obstacle B1.

As described above, if the detection processing unit 122 detects the obstacle B1, the travel processing unit 112 causes the work vehicle 10 to travel along the bypass route Rse connecting the bypass starting position Ps and the bypass end position Pe set by the bypass setting processing unit 113. The bypass route Rse shown in FIG. 6A and FIG. 6B is a turning route with a turning radius r1 and is an example of the bypass route of the present invention. The bypass route of the present invention is not limited to the bypass route Rse shown in FIG. 6A and FIG. 6B.

Note that, if the detection processing unit 122 detects the obstacle B1, the travel processing unit 112 may cause the work vehicle 10 to travel along the bypass route Rse (see FIG. 6A), and if the detection processing unit 122 does not detect the obstacle B1, the travel processing unit 112 may cause the work vehicle 10 to travel along the turning route Rc1 (see FIG. 4C). That is, the work vehicle 10 may be configured to store the turning route Rc1 including the turning starting position P11 and the turning end position P21, and the bypass route Rse including the bypass starting position Ps and the bypass end position Pe, and to select one of the routes depending on the detection result of the obstacle B1.

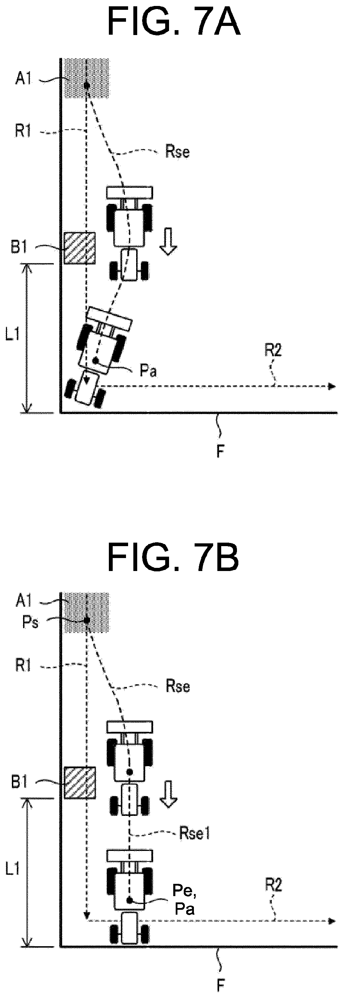

As another embodiment, the bypass route Rse in a case where the obstacle B1 is present at a position away from the corner of the farm field F by a predetermined distance will be described. FIG. 7A shows an example of the travel route. If the work vehicle 10 detects the obstacle B1 ahead while traveling forward along the travel route R1 along the boundary of the farm field F, the work vehicle 10 travels along the bypass route Rse to bypass the obstacle B1. After passing the side of the obstacle B1, the work vehicle 10 performs the turn traveling toward the travel route R1. In this case, if a distance L1 from the obstacle B1 to the end portion of the farm field F is short, as shown in FIG. 7A, the work vehicle 10 results in reaching the corner of the farm field F obliquely with respect to the traveling direction. In this case, the work vehicle 10 needs to repeat the backward traveling and the turn traveling in order to move to the next travel route R2, resulting in a reduction in work efficiency.

Thus, if the distance L1 is equal to or less than a preset threshold Lth, as shown in FIG. 7B, the travel processing unit 112 causes the work vehicle 10 having bypassed the obstacle B1 to travel straight along a parallel route Rse1 parallel to the travel route R1 (straight route) instead of causing the work vehicle 10 to turn toward the travel route R1. Specifically, if the detection processing unit 122 detects the obstacle B1, and the distance L1 is equal to or less than the threshold Lth (if L1≤Lth), the bypass setting processing unit 113 sets the bypass end position Pe on the parallel route Rsel (see FIG. 7B). As a result, the travel processing unit 112 causes the work vehicle 10 having bypassed the obstacle B1 to travel straight along the parallel route Rse1 to the bypass end position Pe.

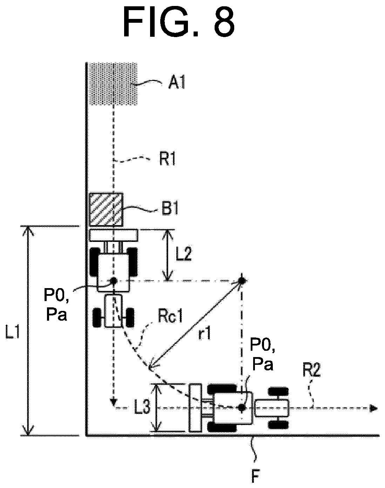

In this process, the threshold Lth is calculated as follows. Specifically, as shown in FIG. 8, the threshold Lth is, as shown in the following formula, calculated as the sum of the turning radius r1 of the work vehicle 10, a distance L2 from a turning center P0 of work vehicle 10 to a rear end of the work machine 14, and a half-length of a width L3 (L3/2) of the work machine 14.

$$Lth = r1 + L2 + L3/2$$

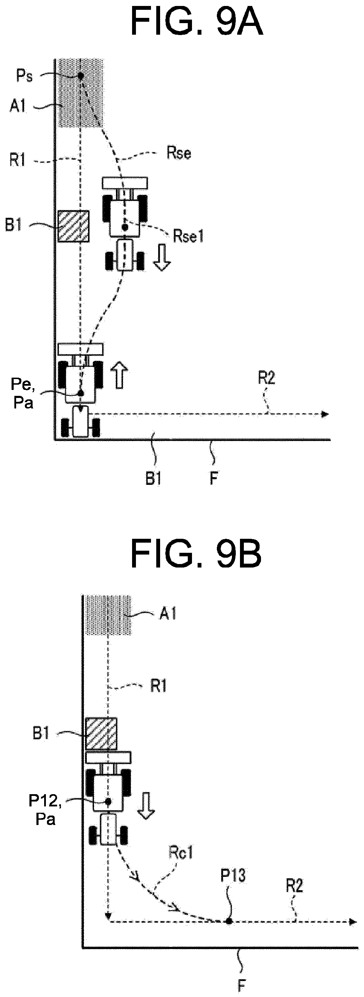

On the other hand, if the distance L1 is greater than the threshold Lth (if L1>Lth), as shown in FIG. 9A, the travel processing unit 112 causes the work vehicle 10 having bypassed the obstacle B1 to turn toward the travel route R1 and then, on the travel route R1, to travel toward the traveling direction. Specifically, if the detection processing unit 122 detects the obstacle B1, and the distance L1 is greater than the threshold Lth, the bypass setting processing unit 113 sets the bypass end position Pe on the travel route R1. As a result, the travel processing unit 112 causes the work vehicle 10 having passed by the obstacle B1 to perform the turn traveling to the bypass end position Pe. When the work vehicle 10 reaches the bypass end position Pe on the travel route R1, the work vehicle 10 travels backward to the turning starting position P12 (see FIG. 9B). Then, after reaching the turning starting position P12, the work vehicle 10 performs the turn traveling along the turning route Rc1 toward the turning end position P13 on the travel route R2 (see FIG. 9B).

In this manner, the bypass setting processing unit 113 sets the bypass end position Pe on the travel route R1 (straight route) or the parallel route Rse1 based on the distance L1 from the obstacle B1 to the end portion of the farm field F on the traveling direction side and the turning radius r1 of the work vehicle 10. Specifically, if the sum of the distance L1, the turning radius r1, and the half-length of the width (L3/2) of the work machine is equal to or less than the threshold Lth, the bypass setting processing unit 113 sets the bypass end position Pe on the parallel route Rsel, and if the sum is greater than the threshold Lth, the bypass setting processing unit 113 sets the bypass end position Pe on the travel route R1 (straight route). Note that, when the obstacle B1 is present on a straight route included in the preset travel route, the bypass route Rse includes the parallel route Rse1 parallel to the straight route at a position where the work vehicle 10 passes the side of the obstacle B1. This makes it possible to reduce the unworked area around the obstacle B1 while causing the work vehicle 10 to continue the automatic traveling while bypassing the obstacle B1.

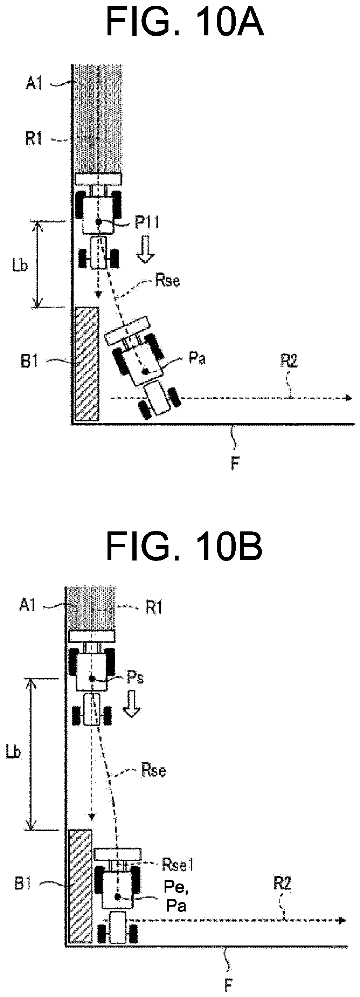

Further, as another embodiment, the bypass route Rse in a case where the obstacle B1 is present at a corner position of the farm field F will be described. FIG. 10A shows an example of the travel route. If the work vehicle 10 detects the obstacle B1 ahead while traveling forward along the travel route R1 along the boundary of the farm field F, the work vehicle 10 travels along the bypass route Rse to bypass the obstacle B1. In this case, if the distance Lb from the turning starting position P11 to the obstacle B1 is short, as shown in FIG. 10A, the work vehicle 10 having passed the side of the obstacle B1 results in reaching the end portion of the farm field F obliquely with respect to the traveling direction. In this case, the work vehicle 10 needs to repeat the backward traveling and the turn traveling in order to move to the next travel route R2, resulting in a reduction in work efficiency.

Thus, when the obstacle B1 is present at the corner position of the farm field F, as shown in FIG. 10B, the travel processing unit 112 causes the work vehicle 10 to turn early and travel along the bypass route Rse, and then causes the work vehicle 10 to travel straight along the parallel route Rse1 parallel to the travel route R1 (straight route). Specifically, if the detection processing unit 122 detects the obstacle B1, the bypass setting processing unit 113 sets the bypass starting position Ps so that the distance Lb from the turning starting position P11 to the obstacle B1 is long. For example, the bypass setting processing unit 113 calculates a turning radius necessary for the work vehicle 10 to bypass the obstacle B1 based on the position and size (width) of the obstacle B1, and then calculates the distance Lb and the bypass starting position Ps based on the turning radius and a distance from a front end of the obstacle B1 to the end portion of the farm field F. Further, the bypass setting processing unit 113 sets the bypass end position Pe on the parallel route Rse1. As a result, the travel processing unit 112 causes the work vehicle 10 to perform the turn traveling in front of the obstacle B1 and then causes the work vehicle 10 to travel straight along the parallel route Rse1 at the side of the obstacle B1 to the bypass end position Pe (see FIG. 10B). According to this configuration, the work vehicle 10 can reach the end portion of the farm field F in a state parallel to the travel route R1, so that the traveling direction of the work vehicle 10 can be appropriately switched to the direction of the travel route R2.

Further, as another embodiment, in the states shown in FIG. 7A and FIG. 10A, after the work vehicle 10 reaches the end portion of the farm field F in the oblique direction, the travel processing unit 112 may cause the work vehicle 10 to travel backward along the bypass route Rse until the work vehicle 10 becomes parallel to the boundary of the farm field F. After that, the travel processing unit 112 causes the work vehicle 10 to travel backward along the travel route R1 by a predetermined distance, and then causes the work vehicle 10 to perform the turn traveling toward the travel route R2. As a result, the traveling direction of the work vehicle 10 can be appropriately switched to the direction of the travel route R2.

[Operation terminal 20]

As shown in FIG. 1, the operation terminal 20 is an information processing device that includes an operation control unit 21, a storage unit 22, an operation display unit 23, a communication unit 24, and the like. The operation terminal 20 may be configured by a portable terminal such as a tablet terminal or a smartphone.

The communication unit 24 is communication interface that connects the operation terminal 20 to the communication network N1 by wire or wirelessly and executes data communication according to a predetermined communication protocol with one or more different external equipment such as the work vehicle 10 via the communication network N1.

The operation display unit 23 is user interface that includes a display unit such as a liquid crystal display or an organic EL display that displays various pieces of information, and an operation unit such as a touch panel, a mouse, or a keyboard that receives operations. The operator can operate the operation unit on an operation screen displayed in the display unit to register various pieces of information (work vehicle information, farm field information, work information, etc., described below). Further, the operator can operate the operation unit to issue an automatic traveling instruction to the work vehicle 10. Further, the operator at a location away from the work vehicle 10 can recognize the traveling state of the work vehicle 10 automatically traveling along the travel routes Ra and Rb in the farm field F from the traveling trajectory displayed in the operation terminal 20.

The storage unit 22 is a non-volatile storage unit such as an HDD or an SSD that stores various pieces of information. The storage unit 22 stores a control program for causing the operation control unit 21 to execute a predetermined control process. For example, the control program is non-temporarily recorded in a computer-readable recording medium such as a CD or a DVD, read by a predetermined reading device (not shown) provided in the operation terminal 20, and stored in the storage unit 22. Note that the control program may be downloaded from a server (not shown) to the operation terminal 20 via the communication network N1 and stored in the storage unit 22. Further, the storage unit 22 may store the work information transmitted from the work vehicle 10.

Further, a dedicated application for causing the work vehicle 10 to perform the automatic traveling is installed in the storage unit 22. The operation control unit 21 starts the dedicated application to perform a process for setting various pieces of information on the work vehicle 10, a process for generating the travel route of the work vehicle 10, an automatic traveling instruction to the work vehicle 10, and the like.

The operation control unit 21 includes control equipment such as a CPU, an ROM, and an RAM. The CPU is a processor that executes various arithmetic processes. The ROM is a non-volatile storage unit in which control programs such as BIOS and OS for causing the CPU to execute the various arithmetic processes are prestored. The RAM is a volatile or non-volatile storage unit that stores various pieces of information and is used as a temporary storage memory (work area) for the various processes executed by the CPU. Finally, the operation control unit 21 controls the operation terminal 20 by causing the CPU to execute the various control programs prestored in the ROM or the storage unit 22.

As shown in FIG. 1, the operation control unit 21 includes various processing units such as a vehicle setting processing unit 211, a farm field setting processing unit 212, a work setting processing unit 213, a route generation processing unit 214, an output processing unit 215, and a reception processing unit 216. Note that the operation control unit 21 functions as the various processing units by causing the CPU to execute the various processes according to the control programs. Further, some or all of the processing units may be configured by an electronic circuit. Note that the control programs may be programs for causing a plurality of processors to function as the processing units.

The vehicle setting processing unit 211 sets information on the work vehicle 10 (hereinafter referred to as "work vehicle information"). The vehicle setting processing unit 211 sets information on the model of the work vehicle 10, the position where positioning antenna 164 is attached to the work vehicle 10, the type of the work machine 14, the size and shape of work machine 14, the position of the work machine 14 with respect to the work vehicle 10, the vehicle speed and engine speed of the work vehicle 10 during work, the vehicle speed and engine speed of the work vehicle 10 during turning, and the like as the operator performs a registration operation of the information on the operation terminal 20.

The farm field setting processing unit 212 sets information on the farm field F (hereinafter referred to as "farm field information"). The farm field setting processing unit 212 sets information on the position and shape of the farm field F, a work starting position S where the work starts, a work end position G where the work ends, a work direction, and the like as the operator performs a registration operation of the information on the operation terminal 20.

Note that the work direction means a direction in which the work vehicle 10 travels while allowing the work machine 14 to work in a work area, which is the farm field F excluding a non-work area such as headland or non-cultivated land.

The information on the position and shape of the farm field F can be acquired automatically, for example, by the operator who rides in the work vehicle 10, drives around an outer periphery of the farm field F once, and records a transition of the position information of the positioning antenna 164 at that time. Further, the position and shape of the farm field F can be acquired based on a polygon shape obtained by the operator who operates the operation terminal 20 displaying a map and designates a plurality of points on the map. The area specified by the acquired position and shape of the farm field F is an area (travel area) in which the work vehicle 10 can travel.

The work setting processing unit 213 sets information on how to specifically perform the work (hereinafter referred to as "work information"). The work setting processing unit 213 is configured to set, as the work information, presence or absence of cooperative work between the work vehicle 10 (unmanned tractor) and the manned work vehicle 10, the skip number, which is the number of work routes skipped when the work vehicle 10 turns in the headland, the width of headland, the width of non-cultivated land, and the like.

The route generation processing unit 214 generates the travel routes Ra and Rb, which are routes along which the work vehicle 10 automatically travels, based on the setting information. The travel route Ra is a work route in the work area Fa inside the farm field F, and the travel route Rb is a work route in the headland area Fb outside the work area Fa (see FIG. 3). The travel route Ra shown in FIG. 3 is a route along which the work vehicle 10 travels back and forth in parallel in the work area Fa, and the travel route Rb shown in FIG. 3 is a route along which the work vehicle 10 spirally travels from the outside toward the inside in the headland area Fb. In the example shown in FIG. 3, the work vehicle 10 plows the entire area in the farm field F. The route generation processing unit 214 can generate and store the travel routes Ra and Rb for the work vehicle 10 based on the setting information set by the vehicle setting processing unit 211, the farm field setting processing unit 212, and the work setting processing unit 213.

Specifically, the route generation processing unit 214 generates the travel routes Ra and Rb (see FIG. 3) based on the work starting position S and the work end position G registered in the farm field setting. The travel routes Ra and Rb are not limited to the routes shown in FIG. 3.

In the work vehicle 10, the data of the travel routes Ra and Rb generated by the operation terminal 20 are transferred to the work vehicle 10 and stored in the storage unit 19. The work vehicle 10 is configured to travel autonomously along the travel routes Ra and Rb while detecting the current position Pa of the work vehicle 10 by the positioning antenna 164. Note that the current position Pa of the work vehicle 10 usually coincides with the position of the positioning antenna 164.

The work vehicle 10 according to the present embodiment travels in the substantially rectangular farm field F as shown in FIG. 3. The work vehicle 10 is configured to automatically travel when the current position Pa is located inside the farm field F. The work vehicle 10 is configured not to automatically travel when the current position Pa is located outside the farm field F (public road, etc.). Further, the work vehicle 10 is configured to automatically travel, for example, when the current position Pa coincides with the work starting position S.

When the operator presses the work starting button on the operation screen and gives an instruction to "start work", if the current position Pa coincides with the work starting position S, the work vehicle 10 is started to work with the work machine 14 (see FIG. 2) by the vehicle control device 11. That is, the operation control unit 21 permits the automatic traveling of the work vehicle 10 on the condition that the current position Pa coincides with the work starting position S. Note that the condition for permitting the automatic traveling of the work vehicle 10 is not limited to the above condition.

The output processing unit 215 outputs the information on the travel routes Ra and Rb generated by the route generation processing unit 214 to the work vehicle 10. Further, the output processing unit 215 can instruct the work vehicle 10 to start and stop the automatic traveling, or the like, by transmitting a control signal to the work vehicle 10 via the communication unit 24. This allows the work vehicle 10 to travel automatically.

For example, the vehicle control device 11 causes the work vehicle 10 to automatically travel from the work starting position S to the work end position G based on the travel routes Ra and Rb acquired from the operation terminal 20. Further, the vehicle control device 11 may cause the work vehicle 10 to automatically travel from the work end position G to the entrance of the farm field F when work vehicle 10 completes the work. When the work vehicle 10 is automatically traveling, the operation control unit 21 can receive the state of the work vehicle 10 (position, travel speed, etc.) from the work vehicle 10 and display it in the operation display unit 23.

The reception processing unit 216 receives from the operator an instruction operation to start the work, an instruction operation to stop the work of the automatically traveling work vehicle 10 (stop instruction operation), and the like. When the reception processing unit 216 receives the stop instruction operation, the output processing unit 215 outputs the stop instruction to the work vehicle 10. In this manner, the vehicle control device 11 of the work vehicle 10 acquires the stop instruction from the operation terminal 20. Upon acquiring the stop instruction, the vehicle control device 11 causes the work vehicle 10 to stop working and traveling.

Further, when the operation control unit 21 acquires a detection result indicating that the obstacle B1 has been detected from the work vehicle 10, the operation control unit 21 causes the operation terminal 20 to display an image captured by the camera 17 with a detection position of the obstacle B1. In this manner, the operator can confirm, on the operation terminal 20, that the work vehicle 10 has detected the obstacle B1, that the work vehicle 10 has decelerated or stopped, the state of the obstacle B1, and the like.

Further, when the obstacle B1 is detected, the reception processing unit 216 may receive from the operator a selection operation as to whether or not to permit the work vehicle 10 to travel along the bypass route Rse. In this case, if the operator permits the travel along the bypass route Rse, the travel processing unit 112 causes the work vehicle 10 to automatically travel along the bypass route Rse. If the operator does not permit the travel along the bypass route Rse, the travel processing unit 112 stops the work vehicle 10. For example, the operator confirms the captured image of the obstacle B1 on the operation terminal 20 and permits the work vehicle 10 to travel along the bypass route Rse.

Note that the operation terminal 20 may be able to access an agricultural support service website (agricultural support site) provided by a server (not shown) via the communication network N1. In this case, the operation terminal 20 can function as an operation terminal for the server in which a browser program is executed by the operation control unit 21. Further, the server includes each of the processing units described above and executes each process.

As another embodiment, each function of the vehicle control device 11 and the detection processing device 12 described above may be included in the operation control unit 21 of the operation terminal 20. That is, for example, the operation control unit 21 may execute the process of acquiring the measurement information from each obstacle sensor 18 of the work vehicle 10 and detecting the obstacle and the process of setting the bypass starting position Ps and the bypass end position Pe of the bypass route Rse.

[Automatic traveling process]

An example of the automatic traveling processes executed by the vehicle control device 11 and the detection processing device 12 will be described below with reference to FIG. 11. For example, the automatic traveling processes are started by the vehicle control device 11 and the detection processing device 12 when the work vehicle 10 starts the automatic traveling.

Note that the present invention may be regarded as an invention of an automatic traveling method in which the vehicle control device 11 and the detection processing device 12 execute part or all of the automatic traveling processes or an invention of an automatic traveling program for causing the vehicle control device 11 and the detection processing device 12 to execute part or all of the automatic traveling method. Further, one or more processors may execute the automatic traveling processes.

When the work vehicle 10 starts to automatically travel along the travel routes Ra and Rb, the vehicle control device 11 acquires the position information (current position Pa) of the work vehicle 10 from the positioning device 16, and the detection processing device 12 acquires the measurement information from the obstacle sensor 18. Here, the automatic traveling processes will be described with reference to examples shown in FIG. 6A and FIG. 6B.

In a step S1, the detection processing device 12 detects the obstacle B1 based on the measurement information acquired from the obstacle sensor 18. Specifically, the detection processing device 12 determines whether or not the obstacle B1 is included in the detection area based on the measurement distance included in the measurement information. If the detection processing device 12 detects the obstacle B1 (S1: Yes), the process proceeds to a step S2. On the other hand, if the detection processing device 12 does not detect the obstacle B1 (S1: No), the process proceeds to a step S7.

Further, the detection processing device 12 outputs a detection result to the operation terminal 20. Having acquired the result of detecting the obstacle B1 from the work vehicle 10, the operation control unit 21 causes the operation terminal 20 to display the captured image of the obstacle B1.

In the step S2, the vehicle control device 11 acquires the obstacle information. Specifically, based on the measurement information, the vehicle control device 11 acquires information on the distance from the turning center of the work vehicle 10 to the obstacle B1, the position of the obstacle B1 with respect to the farm field F, the size (width) of the obstacle B1, and the like.

Next, in a step S3, the vehicle control device 11 determines whether or not the work vehicle 10 can turn at the turning starting position P11. Specifically, the vehicle control device 11 determines whether or not the work vehicle 10 contacts with the obstacle B1 if the work vehicle 10 starts turning at the turning starting position P11 (see FIG. 6A) on the preset travel route R1 and travels along the turning route Rc1. In a case where the work vehicle 10 can turn at the turning starting position P11, that is, in a case where the work vehicle 10 can travel along the turning route Rc1 without contacting with the obstacle B1 (S3: Yes), the process proceeds to a step S31.

In the step S31, the vehicle control device 11 causes the work vehicle 10 to perform the turn traveling along the preset turning route Rc1. Subsequently, in a step S6, the vehicle control device 11 causes the work vehicle 10 to travel straight along the preset travel route R2. In this manner, in the case where the work vehicle 10 does not contact with the obstacle B1, the vehicle control device 11 causes the work vehicle 10 to automatically travel along the preset travel routes R1, Rc1, and R2 without causing the work vehicle 10 to perform the bypass traveling.

On the other hand, in a case where the work vehicle 10 cannot turn at the turning starting position P11, that is, in a case where the work vehicle 10 cannot travel along the turning route Rc1 without contacting with the obstacle B1 (S3: No), the process proceeds to a step S4.

In the step S4, the vehicle control device 11 sets the bypass starting position Ps and the bypass end position Pe for the work vehicle 10 to travel while bypassing the obstacle B1. Specifically, the vehicle control device 11 sets the bypass starting position Ps and the bypass end position Pe (see FIG. 6A) based on the distance from the turning center of the work vehicle 10 to the obstacle B1, the position of the obstacle B1 with respect to the farm field F, the size (width) of the obstacle B1, and the turning radius r1 of the work vehicle 10 included in the obstacle information. Further, the vehicle control device 11 sets the bypass route Rse connecting the bypass starting position Ps and the bypass end position Pe.

Next, in a step S5, the vehicle control device 11 causes the work vehicle 10 to perform the turn traveling along the bypass route Rse. Specifically, after the work vehicle 10 travels forward along the travel route R1 and reaches the end portion of the farm field F, the vehicle control device 11 causes the work vehicle 10 to travel backward along the travel route R1 to the bypass starting position Ps (see FIG. 6A). Then, the vehicle control device 11 causes the work vehicle 10 to perform the turn traveling along the bypass route Rse from the bypass starting position Ps to the bypass end position Pe (see FIG. 6B). Subsequently, in a step S6, the vehicle control device 11 causes the work vehicle 10 to perform the turn traveling from the bypass end position Pe to the travel route R2 and then causes the work vehicle 10 to travel straight along the travel route R2. In this manner, when it is determined that the work vehicle 10 is going to contact with the obstacle B1, the vehicle control device 11 causes the work vehicle 10 to temporarily travel along the bypass route Rse deviating from the preset travel route.

In a step S7, the vehicle control device 11 determines whether or not the work vehicle 10 has completed the work. If the work vehicle 10 has completed the work (S7: Yes), the automatic traveling processes end. On the other hand, if the work vehicle 10 has not completed the work (S7: No), the process returns to the step S1. In this manner, the vehicle control device 11 and the detection processing device 12 continuously cause the work vehicle 10 to perform traveling and working while bypassing the obstacle B1 until the predetermined work is completed.

As described above, when the automatic traveling system 1 according to the present embodiment, upon detection of the obstacle B1 in the traveling direction of the work vehicle 10, sets the bypass starting position Ps, which is the starting position of the bypass route Rse along which the work vehicle 10 travels while bypassing the obstacle B1, and the bypass end position Pe, which is the end position of the bypass route Rse. Then, when the automatic traveling system 1, upon detection of the obstacle B1, causes the work vehicle 10 to travels along the bypass route Rse. In this manner, even if, for example, the obstacle B1 appears temporarily after the travel routes Ra and Rb are set in the work area Fa and the headland area Fb with the obstacle B1 being absent in the farm field F, the work vehicle 10, which detects the obstacle B1 while automatically traveling along the travel routes Ra and Rb, can continue traveling while bypassing the obstacle B1 without stopping the automatic traveling. Thus, it is possible to prevent a reduction in work efficiency caused by the obstacle B1 in the farm field F.

In particular, the obstacle B1 is often placed near the boundary of the farm field F, such as the headland area Fb. According to the configuration of the present embodiment, the work vehicle 10 can bypass the obstacle B1 and continue traveling even in the headland area Fb. Thus, the work vehicle 10 can perform the automatic traveling in the entire area of the farm field F. This can improve working efficiency as compared with the conventional system in which the automatic traveling is performed only in the work area Fa.

Note that the farm field F is an example of a specific area of the present invention. Further, the headland area Fb is an example of a first area of the present invention, and the work area Fa is an example of a second area of the present invention. The specific area of the present invention is not limited to the farm field F and may be any area in which the work vehicle 10 can travel. Further, the first area of the present invention is not limited to the headland area Fb, and the second area of the present invention is not limited to the work area Fa. For example, the first area of the present invention may be an area outside the specific area (near the boundary with the outside of the specific area), and the second area of the present invention may be an area inside the specific area.

As another embodiment, the travel processing unit 112 may cause the work vehicle 10 to travel along the bypass route Rse when the detection processing unit 122 detects the obstacle in the headland area Fb of the farm field F, and the travel processing unit 112 may cause the work vehicle 10 to decelerate or stop when the detection processing unit 122 detects the obstacle in the work area Fa of the farm field F.

In the above embodiment, the vehicle control device 11 sets the bypass route Rse (the bypass starting position Ps and the bypass end position Pe) for bypassing the obstacle B1 when the work vehicle 10 detects the obstacle B1 while performing the automatic traveling. As another embodiment of the present invention, the operation control unit 21 (route generation processing unit 214) may set the bypass route Rse (the bypass starting position Ps and the bypass end position Pe) in the process of generating the travel route for automatic traveling.

Specifically, when the operator riding in the work vehicle 10 drives around the outer periphery of the farm field F once for registering the farm field F, the operation control unit 21 acquires the information on the position and shape of the farm field F and the measurement information on the obstacle B1 (position, size, etc. of the obstacle B1) from the work vehicle 10. The operation control unit 21 generates the travel routes Ra and Rb of the work vehicle 10 based on the setting information set by the vehicle setting processing unit 211, the farm field setting processing unit 212, and the work setting processing unit 213. The operation control unit 21 also generates the bypass route Rse for the work vehicle 10 based on the measurement information on the obstacle B1. The operation control unit 21 transfers the data of the travel routes Ra and Rb and the bypass route Rse to the work vehicle 10. The work vehicle 10 autonomously travels in the farm field F along the travel routes Ra and Rb and the bypass route Rse acquired from the operation terminal 20.

In this manner, even if, for example, the travel route is generated with the obstacle B1 being present in the farm field F, it becomes possible to reduce the unworked area around the obstacle B1 by generating the bypass route Rse by which the obstacle B1 can be appropriately bypassed. As a result, it is possible to prevent a reduction in work efficiency.

Further, in the above embodiment, the work vehicle 10 is configured to automatically travel along the travel route Rb generated in the headland area Fb. As another embodiment, the work vehicle 10 may be configured to automatically travel along a ridge on the boundary of the farm field F in the headland area Fb. Specifically, the work vehicle 10 can automatically travel based on the position information on the ridge acquired from the obstacle sensor 18. Also, in such a case, applying the present invention makes it possible to reduce the unworked area in the headland area and thus to prevent a reduction in work efficiency.

**Claims**

1. An automatic traveling method for causing a work vehicle to perform automatic traveling in a specific area, the method executing processes of:

    detecting an obstacle in a traveling direction of the work vehicle;

**characterized in that** the method further executes procesess of:

    setting a bypass starting position, which is a starting position of a bypass route along which the work vehicle travels while bypassing the obstacle, and a bypass end position, which is an end position of the bypass route; and
    causing the work vehicle to travel along the bypass route upon detection of the obstacle.

2. The automatic traveling method according to claim 1, wherein the bypass starting position and the bypass end position are set based on a turning radius of the work vehicle.

3. The automatic traveling method according to claim 1, wherein, in a case where the work vehicle detects, while traveling along a preset travel route, the obstacle present on the travel route, the bypass starting position and the bypass end position are set based on a turning radius of the work vehicle.

4. The automatic traveling method according to claim 3, wherein, in a case where the obstacle is present on a turning route included in the travel route, the bypass starting position is set, in the traveling direction, in front of a turning starting position connected to the turning route on the travel route.

5. The automatic traveling method according to claim 4, wherein the work vehicle is caused to travel along the bypass route in a case where the obstacle is detected, and the work vehicle is caused to travel along the turning route in a case where the obstacle is not detected.

6. The automatic traveling method according to any of claims 1 to 3, wherein, in a case where the obstacle is present on a straight route included in a preset travel route, the bypass route includes a parallel route parallel to the straight route at a position where the work vehicle passes a side of the obstacle.

7. The automatic traveling method according to claim 6, wherein the bypass end position is set on the straight route or the parallel route based on a distance from the obstacle to an end portion of the specific area on a traveling direction side and the turning radius of the work vehicle.

8. The automatic traveling method according to claim 7, wherein, in a case where a sum of the distance, the turning radius, and a half-length of a width of a work machine is equal to or less than a threshold, the bypass end position is set on the parallel route, and in a case where the sum is greater than the threshold, the bypass end position is set on the straight route.

9. The automatic traveling method according to any of claims 1 to 8, wherein, in a case where the obstacle is detected in a first area in the specific area, the work vehicle is caused to travel along the bypass route, and in a case where the obstacle is detected in a second area in the specific area, the work vehicle is caused to decelerate or stop.

10. An automatic traveling system for causing a work vehicle to perform automatic traveling in a specific area, comprising:

a detection processing unit for detecting an obstacle in a traveling direction of the work vehicle; **characterized in that** the system further comprises:

a bypass setting processing unit for setting a bypass starting position, which is a starting position of a bypass route along which the work vehicle travels while bypassing the obstacle detected by the detection processing unit, and a bypass end position, which is an end position of the bypass route; and a travel processing unit for causing the work vehicle to travel along the bypass route in a case where the obstacle is detected by the detection processing unit.

11. An automatic traveling program for causing a work vehicle to perform automatic traveling in a specific area, the program causing one or more processors to execute processes of:

detecting an obstacle in a traveling direction of the work vehicle; **characterized in that** the program further causes one or more processors to execute processes of:

setting a bypass starting position, which is a starting position of a bypass route along which the work vehicle travels while bypassing the obstacle, and a bypass end position, which is an end position of the bypass route; and causing the work vehicle to travel along the bypass route upon detection of the obstacle.

**Patentansprüche**

1. Automatisches Fahrverfahren zum Veranlassen, dass ein Arbeitsfahrzeug automatisches Fahren in einem spezifischen Bereich durchführt, wobei das Verfahren die folgenden Prozesse ausführt:

Erkennen eines Hindernisses in einer Fahrrichtung des Arbeitsfahrzeugs; **gekennzeichnet dadurch, dass** das Verfahren ferner die folgenden Prozesse ausführt:

Festlegen einer Umgehungsstartposition, die eine Startposition einer Umgehungsroute ist, entlang derer das Arbeitsfahrzeug fährt, während es das Hindernis umgeht, und einer Umgehungsendposition, die eine Endposition der Umgehungsroute ist; und Veranlassen, dass das Arbeitsfahrzeug bei Erkennung des Hindernisses entlang der Umgehungsroute fährt.

2. Automatisches Fahrverfahren nach Anspruch 1, wobei die Umgehungsstartposition und die Umgehungsendposition auf Basis eines Wenderadius des Arbeitsfahrzeugs festgelegt werden.

3. Automatisches Fahrverfahren nach Anspruch 1, wobei, in einem Fall, wo das Arbeitsfahrzeug, während es entlang einer vorfestgelegten Fahrroute fährt, entdeckt, dass ein Hindernis auf der Fahrroute vorhanden ist, die Umgehungsstartposition und die Umgehungsendposition auf Basis eines Wenderadius des Arbeitsfahrzeugs festgelegt werden.

4. Automatisches Fahrverfahren nach Anspruch 3, wobei, in einem Fall, wo das Hindernis auf einer Wenderoute, die in der Fahrroute beinhaltet ist, vorhanden ist, die Umgehungsstartposition in der Fahrrichtung vor einer Wendestartposition, die mit der Wenderoute auf der Fahrroute verbunden ist, festgelegt wird.

5. Automatisches Fahrverfahren nach Anspruch 4, wobei veranlasst wird, dass das Arbeitsfahrzeug entlang der Umgehungsroute fährt, in einem Fall, wo das Hindernis erkannt wird, und veranlasst wird, dass das Arbeitsfahrzeug entlang der Wenderoute fährt, in einem Fall, wo das Hindernis nicht erkannt wird.

6. Automatisches Fahrverfahren nach einem der Ansprüche 1 bis 3, wobei in einem Fall, wo das Hindernis auf einer geraden Route vorhanden ist, die in einer vorfestgelegten Fahrroute beinhaltet ist, die Umgehungsroute eine parallele Route beinhaltet, die an einer Position, wo das Arbeitsfahrzeug eine Seite des Hindernisses passiert, parallel zu der geraden Route ist.

**7.** Automatisches Fahrverfahren nach Anspruch 6, wobei die Umgehungsendposition auf der geraden Route oder der parallelen Route auf Basis eines Abstands von dem Hindernis zu einem Endabschnitt des spezifischen Bereichs auf einer Fahrrichtungsseite und des Wenderadius des Arbeitsfahrzeugs festgelegt wird.

**8.** Automatisches Fahrverfahren nach Anspruch 7, wobei, in einem Fall, wo eine Summe des Abstands, des Wenderadius und einer halben Länge einer Breite der Arbeitsmaschine gleich oder kleiner als ein Schwellenwert ist, die Umgehungsendposition auf der parallelen Route festgelegt wird, und in einem Fall, wo die Summe größer als der Schwellenwert ist, die Umgehungsendposition auf der geraden Route festgelegt wird.

**9.** Automatisches Fahrverfahren nach einem der Ansprüche 1 bis 8, wobei in einem Fall, wo das Hindernis in einem ersten Bereich in dem spezifischen Bereich erkannt wird, veranlasst wird, dass das Arbeitsfahrzeug entlang der Umgehungsroute fährt, und in einem Fall, wo das Hindernis in einem zweiten Bereich in dem spezifischen Bereich erkannt wird, veranlasst wird, dass das Arbeitsfahrzeug abbremst oder anhält.

**10.** Automatisches Fahrsystem zum Veranlassen, dass ein Arbeitsfahrzeug automatisches Fahren in einem spezifischen Bereich durchführt, umfassend:

eine Erkennungs-Verarbeitungseinheit zum Erkennen eines Hindernisses in einer Fahrrichtung des Arbeitsfahrzeugs;
**gekennzeichnet dadurch, dass** das System ferner Folgendes umfasst:

eine Umgehungsfestlegungs-Verarbeitungseinheit zum Festlegen einer Umgehungsstartposition, die eine Startposition einer Umgehungsroute ist, entlang derer das Arbeitsfahrzeug fährt, während es das von der Erkennungs-Verarbeitungseinheit erkannte Hindernis umgeht, und einer Umgehungsendposition, die eine Endposition der Umgehungsroute ist; und
eine Fahr-Verarbeitungseinheit zum Veranlassen, dass das Arbeitsfahrzeug entlang der Umgehungsroute fährt, in einem Fall, wo das Hindernis von der Erkennungs-Verarbeitungseinheit erkannt wird.

**11.** Automatisches Fahrverfahren zum Veranlassen, dass ein Arbeitsfahrzeug automatisches Fahren in einem spezifischen Bereich durchführt, wobei das Programm einen oder mehrere Prozessoren dazu veranlasst, die folgenden Prozesse durchzuführen:

Erkennen eines Hindernisses in einer Fahrrichtung des Arbeitsfahrzeugs;
**gekennzeichnet dadurch, dass** das Programm ferner einen oder mehrere Prozessoren dazu veranlasst, die folgenden Prozesse durchzuführen:

Festlegen einer Umgehungsstartposition, die eine Startposition einer Umgehungsroute ist, entlang derer das Arbeitsfahrzeug fährt, während es das Hindernis umgeht, und einer Umgehungsendposition, die eine Endposition der Umgehungsroute ist; und
Veranlassen, dass das Arbeitsfahrzeug bei Erkennung des Hindernisses entlang der Umgehungsroute fährt.

**Revendications**

**1.** Procédé de déplacement automatique pour amener un véhicule de travail à effectuer un déplacement automatique dans une zone spécifique, le procédé exécutant les processus suivants :

la détection d'un obstacle dans une direction de déplacement du véhicule de travail ;
**caractérisé en ce que** le procédé exécute en outre les processus suivants : la définition d'une position de départ de contournement, qui est une position de départ d'une trajectoire de contournement
le long de laquelle le véhicule de travail se déplace tout en contournant l'obstacle, et d'une position de fin de contournement, qui est une position de fin de la trajectoire de contournement ; et
le fait d'amener le véhicule de travail à se déplacer le long de la trajectoire de contournement lors de la détection de
l'obstacle.

**2.** Procédé de déplacement automatique selon la revendication 1, dans lequel la position de départ de contournement et la position de fin de contournement sont définies sur la base d'un rayon de braquage du véhicule de travail.

**3.** Procédé de déplacement automatique selon la revendication 1, dans lequel, dans un cas où le véhicule de travail détecte, tout en se déplaçant le long d'une trajectoire de déplacement prédéfinie, l'obstacle présent sur la trajectoire de déplacement, la position de départ de contournement et la position de fin de contournement sont définies sur la base d'un rayon de braquage du véhicule de travail.

4. Procédé de déplacement automatique selon la revendication 3, dans lequel, dans un cas où l'obstacle est présent sur une trajectoire de braquage incluse dans la trajectoire de déplacement, la position de départ de contournement est définie, dans la direction de déplacement, à l'avant d'une position de départ de braquage reliée à la trajectoire de braquage sur la trajectoire de déplacement.

5. Procédé de déplacement automatique selon la revendication 4, dans lequel le véhicule de travail est amené se déplacer le long de la trajectoire de contournement dans un cas où l'obstacle est détecté, et le véhicule de travail est amené à se déplacer le long de la trajectoire de braquage dans un cas où l'obstacle n'est pas détecté.

6. Procédé de déplacement automatique selon l'une quelconque des revendications 1 à 3, dans lequel, dans un
cas où l'obstacle est présent sur une trajectoire rectiligne incluse dans une trajectoire de déplacement prédéfinie, la trajectoire de contournement inclut une trajectoire parallèle qui est parallèle à la trajectoire rectiligne au niveau d'une position où le véhicule de travail passe d'un côté de l'obstacle.

7. Procédé de déplacement automatique selon la revendication 6, dans lequel la position de fin de contournement est définie sur la trajectoire rectiligne ou la trajectoire parallèle sur la base d'une distance de l'obstacle à une partie de fin de la zone spécifique d'un côté de la direction de déplacement et du rayon de braquage du véhicule de travail.

8. Procédé de déplacement automatique selon la revendication 7, dans lequel, dans un cas où une somme de la distance, du rayon de braquage et d'une moitié d'une largeur d'une machine de travail est égale ou inférieure à un seuil, la position de fin de contournement est définie sur la trajectoire parallèle, et dans un cas où la somme est supérieure au seuil, la position de fin de contournement est définie sur la trajectoire rectiligne.

9. Procédé de déplacement automatique selon l'une quelconque des revendications 1 à 8, dans lequel, dans un cas où l'obstacle est détecté dans une première zone de la zone spécifique, le véhicule de travail est amené à se déplacer le long de la trajectoire de contournement, et dans un cas où l'obstacle est détecté dans une deuxième zone de la zone spécifique, le véhicule de travail est amené à décélérer ou à s'arrêter.

10. Système de déplacement automatique pour amener un véhicule de travail à effectuer un déplacement automatique dans une zone spécifique, comprenant :

une unité de traitement de détection pour détecter un obstacle dans une direction de déplacement du véhicule de travail ;
**caractérisé en ce que** le système comprend en outre :

une unité de traitement de définition de contournement pour définir une position de départ de contournement, qui est une position de départ d'une trajectoire de contournement le long de laquelle le véhicule de travail se déplace tout en contournant l'obstacle détecté par l'unité de traitement de détection, et une position de fin de contournement, qui est une position de fin de la trajectoire de contournement ; et une unité de traitement de déplacement pour amener le véhicule de travail à se déplacer le long de la trajectoire de contournement dans un cas où l'obstacle est détecté par l'unité de traitement de détection.

11. Programme de déplacement automatique pour amener un véhicule de travail à effectuer un déplacement automatique dans une zone spécifique, le programme amenant un ou plusieurs processeurs à exécuter les processus suivants :

la détection d'un obstacle dans une direction de déplacement du véhicule de travail ;
**caractérisé en ce que** le programme amène en outre un ou plusieurs processeurs à exécuter les processus suivants :

la définition d'une position de départ de contournement, qui est une position de départ d'une trajectoire de contournement le long de laquelle le véhicule de travail se déplace tout en contournant l'obstacle, et une position de fin de contournement, qui est une position de fin de la trajectoire de contournement ; et le fait d'amener le véhicule de travail à se déplacer le long de la trajectoire de contournement lors de la détection de l'obstacle.

# FIG. 1

1

**10 — WORK VEHICLE**

**11 — VEHICLE CONTROL DEVICE**

- 111 — POSITION ACQUISITION PROCESSING UNIT
- 112 — TRAVEL PROCESSING UNIT
- 113 — BYPASS SETTING PROCESSING UNIT

**12 — DETECTION PROCESSING DEVICE**

- 121 — ACQUISITION PROCESSING UNIT
- 122 — DETECTION PROCESSING UNIT

17 — CAMERA

18 — OBSTACLE SENSOR

13 — TRAVELING DEVICE

14 — WORK MACHINE

15 — COMMUNICATION UNIT

19 — STORAGE UNIT

**16 — POSITIONING DEVICE**

- 161 — POSITIONING CONTROL UNIT
- 162 — STORAGE UNIT
- 163 — COMMUNICATION UNIT
- 164 — POSITIONING ANTENNA

N1

**20 — OPERATION TERMINAL**

**21 — OPERATION CONTROL UNIT**

- 211 — VEHICLE SETTING PROCESSING UNIT
- 212 — FARM FIELD SETTING PROCESSING UNIT
- 213 — WORK SETTING PROCESSING UNIT
- 214 — ROUTE GENERATION PROCESSING UNIT
- 215 — OUTPUT PROCESSING UNIT
- 216 — RECEPTION PROCESSING UNIT

22 — STORAGE UNIT

23 — OPERATION DISPLAY UNIT

24 — COMMUNICATION UNIT

# FIG. 2

# FIG. 3

# FIG. 4A

A1

Pa

R1

R2

F

# FIG. 4B

A1

R1

Pa

R2

F

# FIG. 4C

# FIG. 4D

# FIG. 4E

# FIG. 4F

# FIG. 5A

# FIG. 5B

## FIG. 6A

## FIG. 6B

# FIG. 7A

# FIG. 7B

# FIG. 8

# FIG. 9A

# FIG. 9B

# FIG. 10A

# FIG. 10B

# FIG. 11

```
            START
              │
              ▼
          ┌─ S1 ────────────┐      No
        ◇ OBSTACLE DETECTED? ◇ ──────────────┐
          └─────────────────┘                │
              │ Yes                           │
              ▼  S2                           │
   ┌──────────────────────────┐              │
   │ ACQUIRE OBSTACLE INFORMATION │          │
   └──────────────────────────┘              │
              │                               │
              ▼  S3                           │
        ◇ POSSIBLE              ◇   Yes       │
        ◇ TO TURN AT TURNING STARTING ◇ ──┐  │
        ◇ POSITION?             ◇          │  │
              │ No                         │  │
              ▼  S4                        │  │
   ┌──────────────────────────┐           │  │
   │ SET BYPASS STARTING POSITION │        │  │
   │ AND BYPASS END POSITION    │          │  │
   └──────────────────────────┘           │  │
              │  S5                        │ S31 │
   ┌──────────────────────────┐  ┌──────────────────┐
   │ TRAVEL ALONG BYPASS ROUTE │  │ TRAVEL ALONG TURNING │
   └──────────────────────────┘  │ ROUTE            │
              │        ◄──────────└──────────────────┘
              ▼  S6
   ┌──────────────────────────┐
   │ TRAVEL ALONG TRAVEL ROUTE │
   └──────────────────────────┘
              │        ◄──────────────────────────────┘
              ▼  S7
   No   ◇ WORK COMPLETED? ◇
   ◄────◇                  ◇
              │ Yes
              ▼
            END
```

**EP 4 265 091 B1**

**Patent documents cited in the description**

- JP 2018147421 A

- US 2018113471 A1